# EUROPÄISCHE PATENTANMELDUNG

(11) **EP 1 271 826 A2**
(43) Veröffentlichungstag der Anmeldung: **02.01.2003**
(21) Anmeldenummer: 02100611.9
(22) Anmeldetag: 03.06.2002
(51) Int. Cl.: H04J 14/02, H04Q 11/00

(54) **Optisches Übertragungssystem mit bidirektionalen Verbindungspfaden und Verfahren zum Einrichten mindestens eines bidirektionalen Verbindungspfades**

(30) Priorität: 28.06.2001 DE 10131210
(71) Anmelder: SIEMENS AKTIENGESELLSCHAFT, 80333 München (DE)
(72) Erfinder: Stilling, Bernd, 81379, München (DE)

(57) **Zusammenfassung**

Zum Einrichten eines bidirektionalen Verbindungspfades (BVP) in einem optischen Übertragungssystem (ASON) bestehend aus mehreren schaltbaren optischen Netzknoten (ONK1 bis ONK4) mit mehreren unidirektionalen Anschlußeinheiten (IN1 bis IN4, OUT1 bis OUT4), bei dem jede unidirektionale Anschlußeinheit (OUT1) eines Netzknotens (ONK) über einen unidirektionalen Verbindungspfadabschnitt (FA1) an eine unidirektionale Anschlußeinheit (IN1) eines weiteren Netzknotens (ONK') angeschlossen ist, ist eine Anpassungsschicht vorgesehen, über die mindestens zwei entgegensetzte Übertragungsrichtungen (UR1, UR2) aufweisende unidirektionale Anschlußeinheiten (IN1,OUT1) eines optischen Netzknotens (ONK) zu einer bidirektionalen Anschlußeinheit (BA1) zusammengefaßt und gemeinsam angesprochen werden. Hierdurch wird besonderes vorteilhaft das Einrichten von bidirektionalen Verbindungspfaden (BVP) hinsichtlich der zeitlichen Dauer und des Signalisierungsaufwandes verbessert.

## Beschreibung

Die Erfindung betrifft ein optisches Übertragungssystem bestehend aus mehreren schaltbaren optischen Netzknoten mit mehreren unidirektionalen Anschlußeinheiten, bei dem jede unidirektionale Anschlußeinheit eines Netzknotens über einen unidirektionalen Verbindungspfadabschnitts an eine unidirektionale Anschlußeinheit eines weiteren Netzknotens angeschlossen ist. Ferner betrifft die Erfindung ein Verfahren zum Einrichten mindestens eines bidirektionalen Verbindungpfades von einem ersten optischen Netzknoten über zumindest einen Verbindungspfadabschnitt zu einem N-ten optischen Netzknoten in einem derartigen optischen Übertragungssystem.

Bei optischen Übertragungssystemen, insbesondere Wavelength-Division-Multiplexing (WDM)-Übertragungssysteme werden optische Datensignale mit unterschiedlichen Datenraten übertragen. Um hohe Übertragungskapazitäten zu realisieren, werden mehrere, unterschiedliche Wellenlängen aufweisende optische Signale, beispielsweise WDM-Signale, als einzelnes optisches Übertragungssignal bzw. Datensignal übertragen. Hierzu weisen optische Übertragungssysteme beispielsweise in Reihe geschaltete optische "Cross-Connectoren", d.h. optische Netzknoten, auf, die beispielsweise über Punkt-zu-Punkt-Verbindungen über optische Verbindungsfasern miteinander verbunden sind. Hierbei werden optische Verbindungen über mehrere optische "Cross-Connectoren" bzw. optische Netzknoten aufgebaut, Aufrecht erhalten bzw. abgebaut.

Die Betreiber von optischen Transportnetzen bzw. Übertragungssystemen wünschen jedoch eine Steigerung hinsichtlich der Flexibilität der Anpassung derartiger optischer Übertragungssysteme an sich dynamisch ändernde Verkehrsaufkommen bzw. Verkehrsanforderungen. Hierzu werden in den optischen Netzknoten Schaltmatrizen vorgesehen, die ein flexibles Umschalten der optischen Datenströme bzw. optischen Datensignale auf der Basis einzelner Wellenlängen ermöglichen. Dies wird als dynamisches "Wellenlängen-Routing" bezeichnet.

Durch eine Automatisierung dieses "Optical Channel Layers", d.h. das Vorsehen eines automatisch schaltbaren optischen Übertragungssystem ("Automatically Switched Optical Network" (ASON)) werden im Fehlerfall die Wiederherstellungzeiten sowie die Verbindungsaufbauzeiten erheblich reduziert.

Insbesondere ist der Aufbau von bidirektionalen Verbindungen in einem automatisch geschalteten optischen Übertragungssystem (ASON) für die Betreiber derartiger optischer Übertragungssysteme von Interesse. Die hierzu vorgesehene physikalische Schicht ist in einem derartigen optischen automatisch geschalteten Übertragungssystem (ASON) durch unidirektionale optische Verbindungenpfade realisiert. Für das Einrichten eines bidirektionalen optischen Verbindungspfades sind somit zwei unidirektionale optische Verbindungenspfade erforderlich, d.h. für die Hin- und Rückübertragungsrichtung werden zwei separate optische Verbindungspfade vorgesehen. Hierzu wird zunächst ein erster unidirektionaler Verbindungspfad in Hinrichtung und anschließend ein zweiter unidirektionaler Verbindungspfad in Rückrichtung eingerichtet. Hierdurch ist für das Einrichtung bzw. den Aufbau von bidirektionalen Verbindungenspfaden in optischen Übertragungssystemen (ASON) ein erheblicher Signalisierungsaufwand erforderlich.

In dem Artikel "Control of Lightpaths in an Optical Network" Sid Chaudhuri, et. al., Optical Internetworking Forum ist beispielsweise ein Verfahren beschrieben, bei dem ein bidirektionaler optischer Verbindungspfad in zwei getrennten Stufen aufgebaut wird. Hierbei wird zunächst ein unidirektionaler Verbindungspfad in die Hinrichtung und anschließend ein weiterer unidirektionaler Verbindungpfad in Rückrichtung aufgebaut. Gewöhnlich sind beide Richtungen, d.h. Hin- und Rückrichtung, eines bidirektionalen Verbindungspfades über dieselbe Route, d.h. dieselbe optische Faserstrecke, im optischen schaltbaren Übertragungssystem geführt. Gewöhnlich wird für einen unidirektionalen optischen Verbindungspfad ("Link") für die Hin- und Rückrichtung jeweils dieselbe Wellenlänge verwendet. Bei dem in der Veröffentlichung beschriebenen Verbindungspfadaufbau ist der Aufbau eines bidirektionalen Verbindungspfades nur mit erheblichen zusätzlichen Signalisierungsaufwand möglich. Beispielsweise muß bei dem betrachteten Verfahren sichergestellt werden, daß die beim Aufbau der Hinrichtung für die Rückrichtung erforderlichen Ressourcen wie beispielsweise optische Faserstrecke, Wellenlänge etc. innerhalb des optischen Übertragungssystems keinesfalls für den Aufbau von weiteren Verbindungspfaden freigegeben werden, sondern für die aktuelle optische Verbindung reserviert sind. Die Zweistufigkeit des beschriebenen Verfahrens führt zu in etwa doppelt so langen Verbindungsaufbauzeiten im Vergleich zu dem Verbindungsaufbau einer unidirektionalen Verbindung. Ein weiterer Nachteil eines derartigen Verfahrens zum Einrichten eines bidirektionalen Verbindungspfades ist in dem wesentlich erhöhten Zeitbedarf für den Verbindungsaufbau zu sehen.

Ferner ist aus der Veröffentlichung "Extensions to RSVP-TE for Bi-directional Optical Path Setup", von Don Guo et.al., Network Working Group, Januar 2001, ein einstufiges Verfahren für das Einrichten eines bidirektionalen Verbindungspfades bekannt. Hierbei sind die für den Aufbau der Hin- und Rückrichtung eingesetzten Wellenlängen für einen bidirektionale Verbindungspfad beliebig wählbar, so daß das Einrichten des bidirektionalen Verbindungspfades annähernd gleichzeitig durchgeführt werden kann. Bei diesem Verfahren ist jedoch nicht gewährleistet, daß für das Einrichten der Hin- und Rückrichtung eines optischen bidirektionalen Verbindungspfades jeweils dieselbe Wellenlänge vorgesehen wird. Nachteilig werden bei dem betrachteten Verfahren die Hin- und die Rückrichtung jeweils über getrennte Routen, d.h. unterschiedliche optische Verbindungspfade bzw. optische Fasern, im optischen WDM-Übertragungssystem geführt. Hierdurch wird im Fehlerfall die Fehlerdiagnose bzw. die Fehlerlokalisation deutlich erschwert.

Die Aufgabe der vorliegenden Erfindung ist darin zu sehen, ein optisches Übertragungssystem sowie ein Verfahren zum Einrichten von bidirektionalen Verbindungspfaden in diesem optischen Übertragungssystem mit mehreren schaltbaren optischen Netzknoten anzugeben, die das Einrichten von bidirektionalen Verbindungspfaden vereinfacht. Die Aufgabe wird ausgehend von einem optischen Übertragungssystem gemäß Patentanspruch 1 sowie durch ein Verfahren gemäß Patentanspruches 7 gelöst.

Der wesentliche Vorteil des erfindungsgemäßen optischen Übertragungssystem ist darin zu sehen, daß zum Einrichten eines bidirektionalen Verbindungspfades eine Anpassungsschicht vorgesehen ist, über die mindestens zwei entgegensetzte Übertragungsrichtungen aufweisende unidirektionale Anschlußeinheiten eines optischen Netzknotens zu einer bidirektionalen Anschlußeinheit zusammengefaßt und gemeinsam angesprochen werden. Durch das erfindungsgemäße Vorsehen einer Anpassungsschicht, über die zwei entgegengesetzte unidirektionale Anschlußeinheiten als einzelne bidirektionale Anschlußeinheit angesprochen werden, ist besonders vorteilhaft das Einrichten eines bidirektionalen Verbindungspfades ohne zeitlichen Mehraufwand möglich und bereits für den unidirektionalen Verbindungsaufbau in einem optischen Übertragungssystem implementierte Signalisierungsprotokolle, beispielsweise CR-LDP oder RSVP-TE, können nach geringfügigen Modifikationen für den Aufbau von bidirektionalen Verbindungen weiter verwendet werden.

Ein weiterer wesentlicher Aspekt der Erfindung besteht in einem Verfahren zum Einrichten mindestens eines bidirektionalen Verbindungpfades von einem ersten optischen Netzknoten über zumindest einen Verbindungspfadabschnitt zu einem N-ten optischen Netzknoten in einem optischen WDM-Übertragungssystem, bei dem in jedem optischen Netzknoten ein für die Zuordnung der bidirektionalen Verbindungspfadkanäle auf dem mindestens einen angeschlossenen Verbindungspfadabschnitt zuständiger optischer Verwaltungsnetzknoten ermittelt wird, der an den betrachteten Verbindungspfadabschnitt (FA1 bis FA3) angeschlossenen ist. Desweiteren wird in Übertragungsrichtung ("downstream") entlang des bidirektionalen Verbindungspfades (BVP) jeweils von einem optischen Netzknoten an den folgenden optischen Netzknoten eine eine Pfad-Identifikationsnummer sowie die Zielknotenadresse des einzurichtenden bidirektionalen Verbindungspfades enthaltende "Label-Request-Nachricht" gesendet. Im optischen Verwaltungsnetzknoten werden die für den betrachteten Verbindungspfadabschnitt verfügbaren bidirektionalen Verbindungspfadkanäle über die durch die Anpassungsschicht verfügbaren Labels ermittelt und es wird ein verfügbares Label pro angeschlossenen Verbindungspfadabschnitt ausgewählt, wobei das für den Verbindungspfadabschnitt zwischen den Verwaltungsnetzknoten und dem folgenden Nicht-Verwaltungsnetzknoten ausgewählte Label dem Nicht-Verwaltungsnetzknoten anhand der "Label-Request-Nachricht" mitgeteilt wird. Ferner wird in entgegengesetzter Übertragungsrichtung entlang des bidirektionalen Verbindungspfades jeweils von einem optischen Netzknoten an den folgenden optischen Netzknoten eine eine Pfad-Identifikationsnummer enthaltende "Label-Mapping-Nachricht" gesendet, wobei das für den Verbindungspfadabschnitt zwischen einem Verwaltungsnetzknoten und dem folgenden Nicht-Verwaltungsnetzknoten ausgewählte Label durch den Verwaltungsnetzknoten dem folgenden Nicht-Verwaltungsnetzknoten anhand der "Label-Mapping-Nachricht" mitgeteilt wird. In den optischen Nicht-Verwaltungsnetzknoten wird der durch das übermittelte Label festgelegte bidirektionale Verbindungpfadkanal durchgeschaltet wird. Vorteilhaft wird durch das erfindungsgemäße Verfahren gewährleistet, das Einrichten eines bidirektionalen Verbindungspfades die Hinund Rückübertragungsrichtung immer über dieselbe Route geführt wird, wobei die Zuweisung der Wellenlänge für Hin- und Rückübertragungsrichtung für jeden optischen Verbindungspfadabschnitt individuell durchgeführt werden kann. Zusätzlich wird durch das erfindungsgemäße Verfahren besonders vorteilhaft eine feste Zuordnung der Wellenlängen für Hin- und Rückrichtung festgelegt, wodurch ein schneller und einfacher Verbindungsaufbau über den eingerichteten bidirektionalen Verbindungspfad durchführbar wird. Auch die Fehlerlokalisation wird unter Verwendung des erfindungsgemäßen Verfahrens wesentlich vereinfacht.

Weitere vorteilhafte Ausgestaltungen des erfindungsgemäßen optischen Übertragungssystems und des erfindungsgemäßen Verfahrens sind den weiteren Ansprüchen zu entnehmen.

Im folgenden werden Ausführungsbeispiele des erfindungsgemäßen Verfahrens anhand der beiliegenden Zeichnungen erläutert. Darin zeigen:
- Figur 1: beispielhaft einen optischen Netzknoten des erfindungsgemäßen optischen Übertragungssystem,
- Figur 2: beispielhaft den über die erfindungsgemäße Anpassungsschicht ansprechbaren optischen Netzknoten,
- Figur 3: beispielhaft eine erste und zweite Zuordnungstabelle und
- Figur 4: beispielhaft das erfindungsgemäße Verfahren zum Einrichten eines bidirektionalen Verbindungspfades in dem automatisch schaltbaren optischen Übertragungssystem.

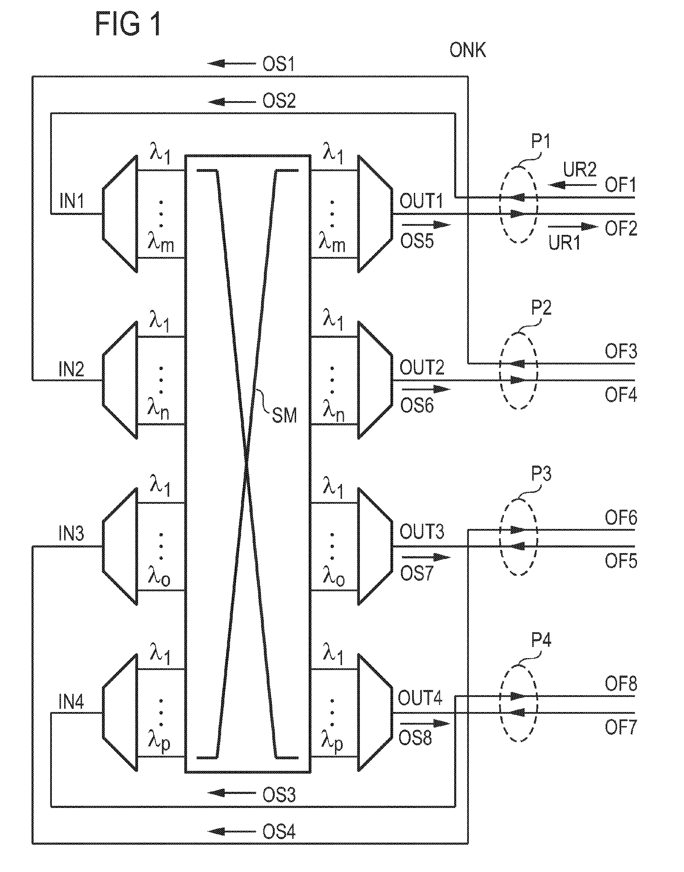

In Figur 1 ist beispielhaft ein schaltbarer optischer Netzknoten ONK eines optischen WDM-Übertragungssystems ASON dargestellt, der mehrere unidirektionale Anschlußeinheiten IN1 bis IN4, OUT1 bis OUT4 aufweist. Im betrachteten Ausführungsbeispiel gemäß Figur 1 sind eine erste bis vierte unidirektionale Anschlußeinheit OUT1 bis OUT4 mit einer ersten Übertragungsrichtung UR1 sowie eine erste bis vierte weitere Anschlußeinheiten IN1 bis IN4 mit einer zweiten Übertragungsrichtung UR2 dargestellt, wobei die erste Übertragungsrichtung UR1 die Hin-Übertragungsrichtung und die zweite, entgegengesetzt zur ersten Übertragungsrichtung UR1 verlaufende Übertragungsrichtung UR2 die Rück-Übertragungsrichtung des optischen WDM-Übertragungssystems ASON darstellt.

Durch die ersten bis vierten Anschlußeinheiten OUT1 bis OUT4 sowie die ersten bis vierten weiteren Anschlußeinheiten IN1 bis IN4 werden eine Vielzahl an die Schaltmatrix SM des optischen Netzknotens ONK geführte unidirektionale Verbindungspfadkanäle λ1 bis λx aus einem optischen WDM-Signal OS1 bis OS4 rückgewonnen bzw. zu einem optischen WDM-Signal OS5 bis OS8 zusammengefaßt. Hierbei kann die Anzahl der optischen unidirektionalen Verbindungspfadkanäle λ1 bis λm, λ1 bis λn, λ1 bis λ0, λ1 bis λp von einer unidirektionalen Anschlußeinheit IN1 zur weiteren unidirektionalen Anschlußeinheit OUT1 variieren. Die optischen unidirektionalen Verbindungspfadkanäle λ1 bis λx einer unidirektionalen Anschlußeinheit IN1 bis IN4, OUT1 bis OUT4 weisen jeweils unterschiedliche Wellenlängen λ1 bis λx auf, wobei in jeder unidirektionalen Anschlußeinheiten IN1 bis IN4 bzw. OUT1 bis OUT4 nahezu dieselben Wellenlängen λ1 bis λx verwendet werden können.

In dem Ausführungsbeispiel gemäß Figur 1 ist an die erste unidirektionale Anschlußeinheit IN1 eine erste optische Faser OF1 sowie an die weitere unidirektionale Anschlußeinheit OUT1 eine zweite optische Faser OF2 angeschlossen. Analog hierzu ist an die zweite unidirektionale Anschlußeinheit IN2 eine dritte optische Faser OF3, an die zweite weitere unidirektionale Anschlußeinheit OUT2 eine vierte optische Faser OF4, an die dritte unidirektionale Anschlußeinheit IN3 eine fünfte optische Faser OF5, an die dritte weitere unidirektionale Anschlußeinheit OUT3 eine sechste optische Faser OF6 sowie an die vierte unidirektionale Anschlußeinheit IN4 eine siebte optische Faser OF7 und an die vierte weitere unidirektionale Anschlußeinheit OUT4 eine achte optische Faser OF8 angeschlossen. Hierbei weisen die erste, dritte, fünfte und siebte optische Übertragungsfaser OF1, OF3, OF5, OF7 die erste Übertragungsrichtung OR1 und die zweite, vierte, sechste, achte optische Faser OF2, OF4, OF6, OF8 die zweite Übertragungsrichtung OR2 auf.

Die erste bis achte optische Übertragungsfaser OF1 bis OF8 ist jeweils über einen unidirektionalen Verbindungspfadsabschnitt FA an eine unidirektionale Anschlußeinheit eines weiteren Netzknotens ONK' (in Figur 1 nicht dargestellt) angeschlossen, woraus sich das optische WDM-Übertragungssystem ASON ergibt.

Zum Einrichtung eines bidirektionalen Verbindungspfades BVP ist eine Anpassungsschicht vorgesehen, über die mindestens zwei der eine erste und zweite Übertragungsrichtung OR1, OR2 aufweisende unidirektionale Anschlußeinheiten IN1, OUT1 des optischen Netzknotens ONK zu einer bidirektionalen Anschlußeinheit P1 zusammengefaßt werden und beispielsweise durch ein Signalisierungsprotokoll gemeinsam angesprochen werden.

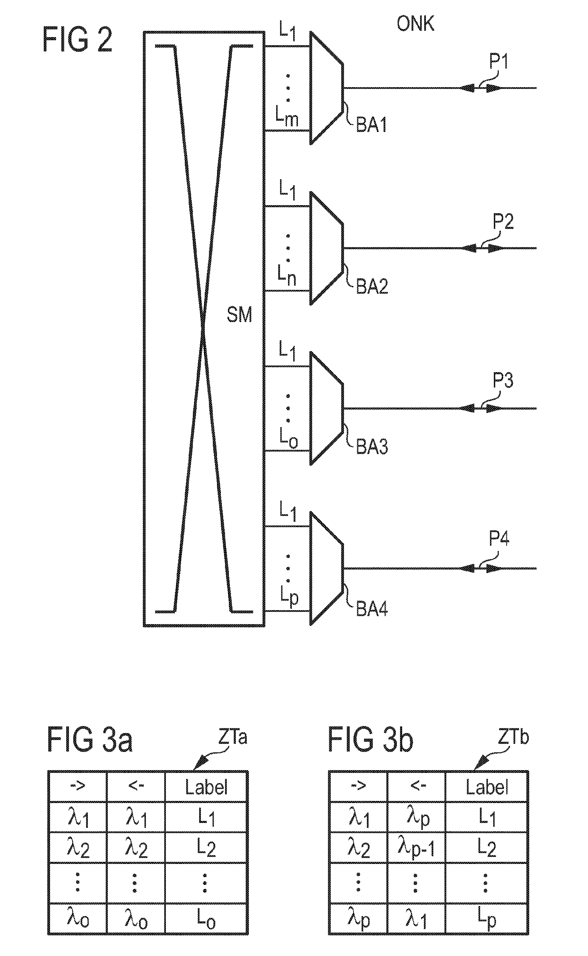

In Figur 2 ist beispielhaft die Zusammenfassung jeweils zwei entgegengesetzte Übertragungsrichtungen UR1, UR2 aufweisender unidirektionaler Anschlußeinheiten IN1 bis IN4, OUT1 bis OUT4 eines optischen Netzknotens ONK zu jeweils einer bidirektionalen Anschlußeinheit BA1 bis BA4 dargestellt. Hierbei sind beispielsweise die erste unidirektionale Anschlußeinheit IN1 sowie die weitere erste unidirektionale Anschlußeinheit OUT1 zu einer ersten bidirektionalen Anschlußeinheit BA1 zusammengefaßt. Analog hierzu ergeben die zweite unidirektionale Anschlußeinheit IN2 und die zweite weitere unidirektionale Anschlußeinheit OUT2 die zweite bidirektionale Anschlußeinheit BA2. Die dritte bidirektionale Anschlußeinheit BA3 setzt sich aus der dritten unidirektionalen Anschlußeinheit IN3 und der dritten weiteren unidirektionalen Anschlußeinheit OUT3 zusammen. Schließlich wird die vierte unidirektionale Anschlußeinheit IN4 und die vierte weitere unidirektionale Anschlußeinheit OUT4 in der vierten bidirektionalen Anschlußeinheit BA4 zusammengefaßt.

Die in Figur 2 dargestellte Konfiguration des optischen Netzknotens ONK zeigt die mit Hilfe der Anpassungsschicht ansprechbaren bidirektionalen Anschlußeinheiten BA1 bis BA4 des optischen Netzknotens ONK. Ferner wird jeder bidirektionalen Anschlußeinheit BA1 bis BA4 über die Anpassungsschicht eine Portnummer P1 bis P4 zugeordnet, d.h. die erste bidirektionale Anschlußeinheit BA1 ist über die Portnummer P1, die zweite bidirektionale Anschlußeinheit BA2 über die Portnummer P2, die dritte bidirektionale Anschlußeinheit BA3 über die Portnummer P3 und die vierte bidirektionale Anschlußeinheit BA4 über die Portnummer P4 direkt über die Anpassungsschicht ansprechbar.

Desweiteren weist jede der bidirektionalen Anschlußeinheiten BA1 bis BA4 mehrere optische unidirektionale Verbindungspfadkanäle λ1 bis λm, λ1 bis λn, λ1 bis λ0, λ1 bis λp mit jeweils unterschiedlichen Wellenlängen λ1 bis λx auf. Mit Hilfe der Anpassungsschicht werden einer bidirektionalen Anschlußeinheit BA1 bis BA4 mehrere bidirektionale Verbindungspfadkanäle L1 bis Lx zugeordnet, wobei zwei unidirektionale Verbindungspfadkanäle λ1, λm mit entgegengesetzten Übertragungsrichtungen UR1, UR2 als ein bidirektionaler Verbindungspfadkanal L1 bis Lm über die Anpassungsschicht angesprochen werden. Hierzu wird durch die Anpassungsschicht jeweils einem bidirektionalen Verbindungspfadkanal L1 bis Lm in einer bidirektionalen Anschlußeinheit BA1 bis BA4 jeweils ein Label L1 bis Lm, L1 bis Ln, L1 bis L0, L1 bis Lp zugeordnet. Diese Zuordnung ist individuell für jeden optischen Faserstreckenabschnitt FA zwischen zwei optischen Netzknoten ONK, ONK durchführbar und in Form einer Zuordnungstabelle ZTa, ZTb im optischen WDM-Übertragungssystem ASON gespeichert.

In Figur 3a und 3b sind zwei mögliche Zuordnungstabellen ZTa, ZTb hinsichtlich der Wellenlänge λ1 bis λx für die erste und zweite Übertragungsrichtung UR1 bis UR2 eines bidirektionalen Verbindungspfadkanals L1 bis L0, L1 bis Lp dargestellt. Bei der in Figur 3a dargestellten ersten Zuordnungstabelle ZTa werden für die Übertragung in Hin- und Rückübertragungsrichtung, d.h. in erster und zweiter Übertragungsrichtung UR1, UR2, jeweils dieselbe Wellenlänge (λ1,λ1) bis (λo,λo) verwendet. Im Gegensatz hierzu werden bei der in Figur 3b dargestellten zweiten Zuordnungstabelle ZTb jeweils zwei unterschiedliche Wellenlängen (λ1,λp) bis (λp,λ1) aufweisende unidirektionale Verbindungspfadkanäle zu einem bidirektionalem Verbindungspfadkanal L1 bis Lp zusammengefaßt, wobei im betrachteten Ausführungsbeispiel für beispielsweise das erste Label L1 für die Hinübertragungsrichtung UR1 eine erste Wellenlänge λ1 und für die Rückübertragungsrichtung UR2 eine zweite Wellenlänge λp vorgesehen sind. In einem bevorzugten Ausführungsbeispiel der Erfindung ist für das gesamte optische WDM-Übertragungssystem ASON eine einzige Zuordnungstabelle ZTa festgelegt, anhand der die Zuordnung der Wellenlängen λ1 bis λx für Hin- und Rückübertragungsrichtung UR1, UR2 einheitlich für das gesamte optische WDM-Übertragungssystem ASON festgelegt ist. Hierdurch kann beispielsweise für die Übertragung der Daten in Hin- und Rückübertragungsrichtung jeweils dieselbe Wellenlänge festgelegt werden.

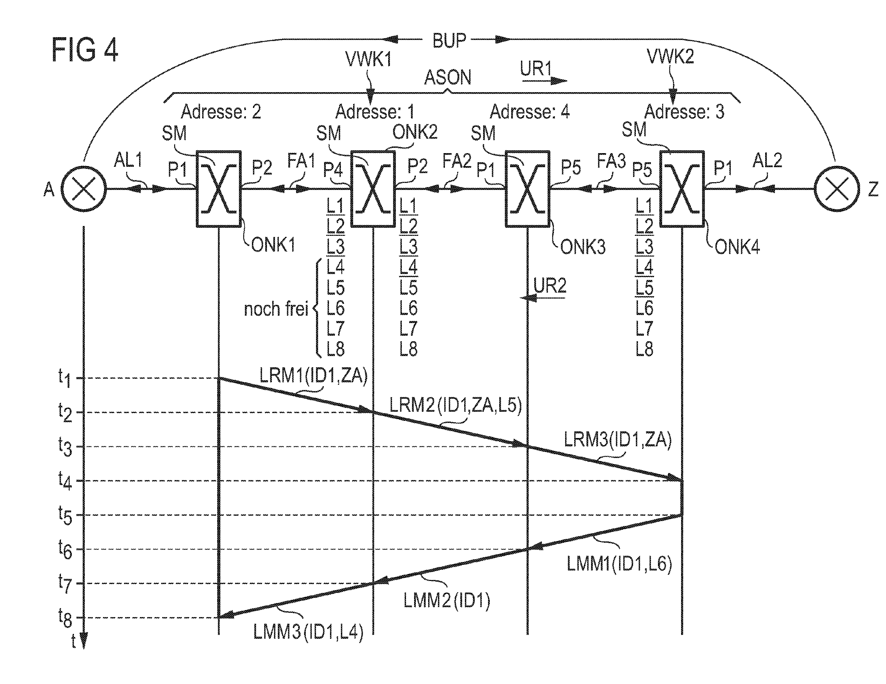

In Figur 4 ist ein automatisch schaltbares optisches WDM-Übertragungssystem ASON dargestellt, das einen ersten, zweiten, dritten und vierten optischen Netzknoten ONK1 bis ONK4 sowie einen ersten Endknoten A und einen zweiten Endknoten Z aufweist. Der erste bis vierte optische Netzknoten ONK1 bis ONK4 weisen im dargestellten Ausführungsbeispiel jeweils eine automatisch schaltbare Schaltmatrix SM sowie einen Wellenkonverter WK (in Figur 4 nicht dargestellt) auf. Für das erfindungsgemäße Verfahren ist das Vorsehen eines Wellenlängenkonverters WK in den jeweiligen optischen Netzknoten ONK1 bis ONK4 nicht erforderlich, d.h. es können optional in einzelnen optischen Netzknoten sowie in keinen oder allen optischen Netzknoten ONK1 bis ONK4 optische Wellenlängenkonverter WK vorgesehen werden. Desweiteren weisen der erste bis vierte optische Netzknoten ONK1 bis ONK4 jeweils unterschiedliche Knotenadressen auf, d.h. jeder optische Netzknoten ONK1 bis ONK4 ist innerhalb des automatisch geschalteten optischen WDM-Übertragungssystems ASON eindeutig anhand seiner Knotenadresse identifizierbar und somit beispielsweise über ein Signalisierungsprotokoll ansprechbar. Im dargestellten Ausführungsbeispiel weist der erste optische Netzknoten ONK1 die Adresse 2, der zweite optische Netzknoten ONK2 die Adresse 1, der dritte optische Netzknoten ONK3 die Adresse 4 sowie der vierte optische Netzknoten ONK4 die Adresse 3 auf.

Der erste Endknoten A und zugleich der Ausgangspunkt für das Einrichten des optischen bidirektionalen Verbindungspfades BVP ist über eine erste Anschlußleitung AL1 an die erste bidirektionale Anschlußeinheit P1 mit der Portnummer P1 des ersten optischen Netzknotens ONK1 angeschlossen. Die erste bidirektionale Anschlußeinheit P1 ist über die Schaltmatrix SM des ersten optischen Netzknotens ONK1 mit der zweiten bidirektionalen Anschlußeinheiten P2 mit der Portnummer P2 verbunden, die über einen ersten optischen Verbindungspfadabschnitt FA1 an die vierte bidirektionale Anschlußeinheit P4 mit der Portnummer P4 des zweiten optischen Netzknotens ONK2 verbunden ist. Die vierte bidirektionale Anschlußeinheit P4 ist über die Schaltmatrix SM an die zweite bidirektionale Anschlußeinheit P2 des zweiten optischen Netzknotens ONK2 geführt. Die zweite bidirektionale Anschlußeinheit P2 des zweiten optischen Netzknotens ONK2 ist über den zweiten optischen Verbindungspfadabschnitt FA2 mit der ersten bidirektionalen Anschlußeinheit P1 mit der Portnummer P1 des dritten optischen Netzknotens ONK3 verbunden, innerhalb dessen die erste bidirektionale Anschlußeinheit P1 über die Schaltmatrix SM mit der fünften bidirektionalen Anschlußeinheit P5 verbunden ist. Die fünfte bidirektionale Anschlußeinheit P5 des dritten optischen Netzknotens NK3 ist über einen dritten optischen Verbindungspfadabschnitt FA3 an die fünfte bidirektionale Anschlußeinheit P5 des vierten optischen Netzknotens ONK4 angeschlossen. Innerhalb des vierten optischen Netzknotens ONK4 ist die fünfte bidirektionale Anschlußeinheit P5 über die Schaltmatrix SM an die erste bidirektionale Anschlußeinheit P1 des vierten optischen Netzknotens ONK4 angeschlossen, der über eine zweite optische Anschlußleitung AL2 an den Zielknoten, d.h. den zweiten Endknoten Z, angeschlossen ist.

Zum Einrichten eines bidirektionalen Verbindungspfades BVP vom ersten Endknoten A zum zweiten Endknoten Z über den ersten bis vierten optischen Netzknoten ONK1 bis ONK4, d.h. über den ersten, zweiten und dritten optischen Verbindungspfadabschnitt FA1 bis FA3 werden in jedem optischen Netzknoten ONK1 bis ONK4 ein für die Zuordnung der Verbindungspfadkanäle L1 bis L8 zuständiger optischer Verwaltungsnetzknoten VWK1, VWK2 ermittelt. Ein derartiger optischer Verwaltungsnetzknoten VWK1, VWK2 verwaltet mindestens einen optischen Verbindungspfadabschnitt FA1, FA2 hinsichtlich der Zuordnung von verfügbaren optischen Verbindungspfadkanälen L1 bis L8.

Im dargestellten Ausführungsbeispiel werden die optischen Verwaltungsknoten VWK1, VWK2 anhand der Knotenadresse des ersten bis vierten optischen Netzknotens ONK1 bis ONK4 bestimmt. Hierbei wird beispielsweise der Netzknoten ONK1 bis ONK4 mit der kleinsten Knotenadresse hinsichtlich seiner beiden benachbarten, d.h. an ihn über optische Verbindungspfadabschnitte FA1 bis FA3 angeschlossenen optischen Netzknoten ONK1 bis ONK4 als Verwaltungsknoten VWK1, VWK2 für die betrachteten Verbindungspfadabschnitte FA1, FA2 bestimmt. Im betrachteten Ausführungsbeispiel weist der zweite optische Netzknoten ONK2 die kleinste Knotenadresse mit dem Wert 1 auf, und ist somit der erste Verwaltungsknoten VWK1 auf dem bidirektionalen Verbindungspfad BVP von dem ersten Endknoten A zu dem zweiten Endknoten Z, d.h. die Knotenadressen des ersten optischen Netzknotens ONK1 sowie des angeschlossenen dritten optischen Netzknotens ONK3, mit den Werten 2 und 4 sind größer als die Knotenadresse des zweiten optischen Netzknotens ONK2 und wurden deshalb nicht als Verwaltungsnetzknoten sondern als Nicht-Verwaltungsnetzknoten bestimmt. Analog zur beschriebenen Vorgehensweise wird im dargestellten Ausführungsbeispiel der vierte optische Netzknoten ONK4 zum zweiten optischen Verwaltungsnetzknoten VWK2 bestimmt, da dessen Knotenadresse mit dem Wert 3 geringer ist als die Knotenadresse des an diesen über den dritten Verbindungspfadabschnitt FA3 angeschlossenen dritten optischen Netzknoten ONK3 mit dem Wert 4.

Somit sind der erste und dritte optische Netzknoten ONK1, ONK3 keine optischen Verwaltungsnetzknoten VWK1, VWK2 bzw. Nicht-Verwaltungsnetzknoten und der zweite und vierte optische Netzknoten ONK2, ONK4 sind als erster und zweiter optischer Verwaltungsknoten VWK1, VWK2 bestimmt. Im dargestellten Ausführungsbeispiel ist der erste optische Verwaltungsknoten VWK1 für die Zuordnung der Verbindungspfadkanäle L1 bis L8 auf den ersten sowie auf den zweiten optischen Verbindungspfadabschnitt FA1, FA2 zuständig. Analog hierzu ist der zweite optische Verwaltungsnetzknoten VWK2 für die Zuordnung der Verbindungspfadkanäle L1 bis L8 auf den dritten optischen Verbindungspfadabschnitt FA3 zuständig.

Zum Einrichten eines bidirektionalen Verbindungspfades BVP vom ersten Endknoten A zum zweiten Endknoten Z wird im ersten optischen Netzknoten ONK1, der kein Verwaltungsknoten VWK1, VWK2 ist, eine "Label-Request-Nachricht" LRM(Id1,ZA) gebildet, die unter anderem eine Pfadidentifikationsnummer ID1 sowie eine Zieladresse ZA beinhaltet. Hierbei kennzeichnet die Pfadidentifikationsnummer ID1 eindeutig den bidirektionalen Verbindungspfad BVP sowie die Zielknotenadresse die Adresse des zweiten Endknotens Z, bei der der einzurichtende bidirektionale Verbindungspfad BVP endet.

Im ersten optischen Verwaltungsnetzknoten VWK1 werden die für das Einrichten eines bidirektionalen Verbindungspfades BVP sowohl auf den ersten optischen Verbindungspfadabschnitt FA1 als auch auf den zweiten optischen Verbindungspfadabschnitt FA2 verfügbaren bidirektionalen Verbindungspfadkanäle L1 bis L8 ermittelt sowie die anhand der Anpassungsschicht den verfügbaren bidirektionalen Verbindungspfadkanälen L1 bis L8 zugeordneten verfügbaren Labels L1 bis L8 ermittelt. Aus der Menge der verfügbaren bidirektionalen Verbindungspfadkanäle bzw. deren zugeordneten Labels L1 bis L8 wird ein verfügbares Label L1 bis L8 für den jeweiligen ersten oder zweiten optischen Verbindungspfadabschnitt FA1, FA2 ausgewählt.

Im Ausführungsbeispiel gemäß Figur 4 sind beispielsweise im ersten optischen Verwaltungsknoten VWK1 für den ersten optischen Verbindungspfadabschnitt FA1 das erste bis dritte Label L1 bis L3 bereits belegt und das vierte bis achte Label L4 bis L8 stehen für den Verbindungsaufbau noch zur Verfügung. Ferner sind für das Einrichten eines bidirektionalen Verbindungspfades BVP über den zweiten optischen Verbindungspfadabschnitt FA2 noch das fünfte bis achte Label L5 bis L8 verfügbar, wohingegen das erste bis vierte Label L1 bis L4 bereits verwendet werden. Desweiteren stehen für den Verbindungaufbau über den dritten Verbindungspfadabschnitt FA3 das sechste bis achte Label L6 bis L8 zur Verfügung, während dessen das erste bis fünfte Label L1 bis L5 belegt sind. Im betrachteten Ausführungsbeispiel wird für die Einrichtung des bidirektionalen Verbindungspfades BVP für den ersten optischen Verbindungspfadabschnitt FA1 der vierte bidirektionale Verbindungspfadkanal L4 bzw. das verfügbare vierte Label L4, für den zweiten optischen Verbindungspfadabschnitt FA2 der fünfte bidirektionale Verbindungspfadkanal L5 bzw. das fünfte verfügbare Label L5 und für den dritten optischen Verbindungspfadabschnitt FA3 der sechste bidirektionale Verbindungspfadkanal L6 bzw. das sechste verfügbare Label L6 ausgewählt.

Hierzu wird zum ersten Zeitpunkt t1 vom ersten optischen Netzknoten ONK1 bzw. Nicht-Verwaltungsnetzknoten eine erste "Label-Request-Nachricht" LRM1(ID1,ZA) gebildet, die die Pfadidentifikationsnummer ID1 sowie die Zielknotenadresse ZA enthält. Diese wird anschließend in Übertragungsrichtung UER1, d.h. "Upstream", an den ersten Verwaltungsnetzknoten VWK1 gesendet, der wie bereits beschrieben den vierten bilateralen Verbindungspfadkanal L4 für das Einrichten des bidirektionalen Verbindungspfades BVP auf dem ersten optischen Verbindungspfadabschnitt FA1 auswählt. Das ausgewählte vierte Label L4 wird zu einem späteren Zeitpunkt dem ersten optischen Netzknoten ONK1 mitgeteilt.

Zum zweiten Zeitpunkt t2 wird im zweiten optischen Netzknoten ONK2 bzw. ersten Verwaltungsnetzknoten VWK1 eine zweite "Label-Request-Nachricht" LRM2(ID1,ZA,L4) gebildet, in die jedoch zusätzlich zu der Pfadidentifikationsnummer ID1 und der Zielknotenadresse ZA der für den zweiten optischen Faserstreckenabschnitt FA2 ausgewählte fünfte bidirektionale Verbindungspfadkanal L5 bzw. das ausgewählte fünfte Label L5 eingefügt wird. Die zweite "Label-Request-Nachricht" LRM2(ID1,ZA,L4) wird über den zweiten Verbindungspfadabschnitt FA2 an den dritten optischen Netzknoten ONK3 übertragen und somit dem dritten optischen Netzknoten ONK3 zum dritten Zeitpunkt t3 die Zuordnung des vierten Labels L4 für den zweiten optischen Verbindungspfadabschnitts FA2 mitgeteilt. Daraufhin wird im dritten optischen Netzknoten ONK3 die Schaltmatrix SM entsprechend der Zuordnung des fünften Labels L5 eingestellt.

Im Anschluß wird durch den dritten Netzknoten ONK3 - Nicht-Verwaltungsnetzknoten - ebenfalls zum dritten Zeitpunkt t3 eine dritte "Label-Request-Nachricht" LRM3(ID1,ZA) für den dritten optischen Verbindungspfadabschnitt FA3 gebildet und an den zweiten Verwaltungsnetzknoten VWK2 bzw. den vierten optischen Netzknoten ONK4 gesendet. Die dritte "Label-Request-Nachricht" LRM3(ID1,ZA) umfaßt die Pfadidentifikationsnummer ID1 sowie die Zielknotenadresse ZA des zweiten Endknotens Z.

Zum vierten Zeitpunkt t4 wird die dritte "Label-Request-Nachricht" LRM3(ID1,ZA) im vierten optischen Netzknoten ONK4 bzw. zweiten Verwaltungsnetzknoten VWK2 empfangen und ausgewertet. Der zweite Verwaltungsnetzknoten VWK2 ermittelt die auf dem dritten Verbindungspfadabschnitt FA3 verfügbaren Verbindungspfadkanäle L6 bis L8 und wählt in unserem Ausführungsbeispiel den sechsten bidirektionalen Verbindungspfadkanal bzw. das sechste Label L6 für den Verbindungsaufbau aus. Gemäß dem ausgewählten sechsten bidirektionalen Verbindungspfadkanals L6 werden die Schaltstellungen in der Schaltmatrix SM des vierten optischen Netzknotens ONK4 eingestellt, so daß der letzte über die zweite Anschlußleitung AL2 zum zweiten Endknoten Z über die Schaltmatrix SM des vierten optischen Netzknotens ONK4 zum dritten optischen Faserstreckenabschnitt FA3 verlaufende Pfadabschnitt des bidirektionalen Verbindungspfades BVP eingerichtet ist.

Zum vierten Zeitpunkt t4 wird im zweiten Verwaltungsknoten VWK2 eine erste "Label-Mapping-Nachricht" LMM1(ID1,L6) gebildet, die die Pfadidentifikationsnummer ID1 und das für den dritten Verbindungspfadabschnitt FA3 ausgewählte sechste Label L6 enthält. Die erste "Label-Mapping-Nachricht" LMM1(ID1,L6) wird zum fünften Zeitpunkt t5 in entgegengesetzter Übertragungsrichtung UE2, d.h. "Downstream", an den dritten Netzknoten ONK3 übertragen und zum sechsten Zeitpunkt t6 im dritten optischen Netzknoten ONK3 ausgewertet. Im Anschluß werden entsprechend dem dem dritten optischen Netzknoten ONK3 zugeordneten sechsten Label L6 in der Schaltmatrix SM des dritten optischen Netzknotens ONK3 die erforderlichen Schalteinstellungen vorgenommen.

Ferner wird zum sechsten Zeitpunkt t6 im dritten optischen Netzknoten ONK3 eine zweite "Label-Mapping-Nachricht" LMM2(ID1) gebildet, die im betrachteten Ausführungsbeispiel nur die Pfadidentifikationsnummer ID1 umfaßt, da der für den zweiten Verbindungspfadabschnitt FA2 festgelegte Verbindungspfadkanal L5 bereits mit der zweiten "Label-Request-Nachricht" LRM2(ID1,ZA,L5) dem dritten optischen Netzknoten ONK3 mitgeteilt wurde. Die zweite "Label-Mapping-Nachricht" LMM2(ID1) wird in entgegengesetzter Übertragungsrichtung UER2 an den zweiten optischen Netzknoten ONK2 bzw. den ersten Verwaltungsnetzknoten VWK1 übertragen.

Im zweiten optischen Netzknoten ONK2 bzw. ersten optischen Verwaltungsnetzknoten VWK1 wird zum siebten Zeitpunkt t7 anhand der übermittelten zweiten "Label-Mapping-Nachricht" LMM2(ID1) die zuvor durch ersten Verwaltungsknoten VWK1 ausgewählte Zuordnung des fünften Labels L5 für den zweiten Verbindungspfadabschnitt FA2 die Schaltmatrix SM des ersten Verwaltungsknotens VWK1 entsprechend eingestellt. Ferner wird die Schaltmatrix SM im ersten Verwaltungsnetzknoten VWK1 an die für den ersten Verbindungspfadabschnitt FA1 ausgewählte Zuordnung des vierten Labels L4 angepaßt.

Zusätzlich wird durch den ersten Verwaltungsnetzknoten VWK1 zum siebten Zeitpunkt t7 eine dritte "Label-Mapping-Nachricht" LMM3(ID1,L4) gebildet, die die Pfadidentifikationsnummer ID1 und das für den ersten bidirektionalen Verbindungspfadabschnitt FA1 ausgewählte vierte Label L4 enthält. Die dritte "Label-Mapping-Nachricht" LMM3(ID1,L4) wird an den ersten optischen Netzknoten ONK1 übertragen.

Im ersten optischen Netzknoten ONK1 wird zum achten Zeitpunkt t8 die dritte "Label-Mapping-Nachricht" LMM3(ID1,L4) empfangen und durch diesen ausgewertet. Hierdurch wird analog zu dem vorherigen Verfahrensschritten dem ersten optischen Netzknoten ONK1 mit Hilfe der dritten "Label-Mapping-Nachricht" LMM3(ID1,L4) die auf den ersten optischen Verbindungspfadabschnitt FA1 vorgesehene Zuordnung des vierten Verbindungspfadkanals bzw. des vierten Labels L4 angezeigt und zur eindeutigen Identifizierung der ersten "Label-Mapping-Nachricht" LMM(ID1,L4) die Pfadidentifikationsnummer ID1 übermittelt.

Nach der Auswertung der dritten "Label-Mapping-Nachricht" LMM3(ID1,L4) wird die Schaltmatrix SM im ersten optischen Netzknoten ONK1 entsprechend der Zuordnung des vierten Labels L4 eingestellt. Somit ist der bidirektionale Verbindungspfad BVP eingerichtet und es kann der Verbindungsaufbau sowie anschließend die Übertragung von Daten D über den eingerichteten bidirektionalen Verbindungpfad BVP durchgeführt werden.

## Patentansprüche

1. Optisches Übertragungssystem bestehend aus mehreren schaltbaren optischen Netzknoten (ONK, ONK') mit mehreren unidirektionalen Anschlußeinheiten (IN1 bis IN4, OUT1 bis OUT4), bei dem jede unidirektionale Anschlußeinheit (IN1 bis IN4, OUT1 bis OUT4) eines Netzknotens (ONK) über einen unidirektionalen Verbindungspfadabschnitt (FA1) an eine unidirektionale Anschlußeinheit (IN1 bis IN4, OUT1 bis OUT4) eines weiteren Netzknotens (ONK') angeschlossen ist,
**dadurch gekennzeichnet,**
**daß** zum Einrichten eines bidirektionalen Verbindungspfades (BVP) eine Anpassungsschicht vorgesehen ist, über die mindestens zwei entgegensetzte Übertragungsrichtungen (UR1, UR2) aufweisende unidirektionale Anschlußeinheiten (IN1, OUT1) eines optischen Netzknotens (ONK) zu einer bidirektionalen Anschlußeinheit (BA1) zusammengefaßt und gemeinsam angesprochen werden.

2. Optisches Übertragungssystem nach Anspruch 1,
**dadurch gekennzeichnet,**
**daß** jeder bidirektionalen Anschlußeinheit (BA1 bis BA4) in der Anpassungsschicht eine Portnummer (P1 bis P4) zugeordnet ist.

3. Optisches Übertragungssystem nach Anspruch 1 oder 2,
**dadurch gekennzeichnet,**
**daß** jede unidirektionale Anschlußeinheit (IN1 bis IN4, OUT1 bis OUT4) mehrere optische unidirektionale Verbindungspfadkanäle (λ1 bis λm, λ1 bis λn, λ1 bis λo, λ1 bis λp) mit unterschiedlichen Wellenlängen aufweist.

4. Optisches Übertragungssystem nach einem der Ansprüche 1 bis 3,
**dadurch gekennzeichnet,**
**daß** durch die Anpassungsschicht einer bidirektionalen Anschlußeinheit (BA1 bis BA4) mehrere bidirektionale Verbindungspfadkanäle (L1 bis Lx) zugeordnet sind.

5. Optisches Übertragungssystem nach Anspruch 4,
**dadurch gekennzeichnet,**
**daß** durch die Anpassungschicht zwei unidirektionale Verbindungspfadkanäle (λ1, λp) mit entgegengesetzten Übertragungsrichtungen (UR1, UR2) als ein bidirektionaler Verbindungspfadkanal (L1) angesprochen werden.

6. Optisches Übertragungssystem nach Anspruch 5,
**dadurch gekennzeichnet,**
**daß** durch die Anpassungsschicht jeweils einem bidirektionalen Verbindungspfadkanal (L1 bis Lx) in einer bidirektionalen Anschlußeinheit (BA1 bis BA4) eines optischen Netzknotens (ONK1 bis ONK4) ein Label (L1 bis Lx) zugeordnet ist.

7. Verfahren zum Einrichten mindestens eines bidirektionalen Verbindungpfades (BVP) von einem ersten optischen Netzknoten (ONK1) über zumindest einen Verbindungspfadabschnitt (FA1 bis FA3) zu einem N-ten optischen Netzknoten (ONK4) in einem optischen Übertragungssystem (ASON),
**dadurch gekennzeichnet,**
**daß** in jedem optischen Netzknoten (ONK1 bis ONK4) ein für die Zuordnung der bidirektionalen Verbindungspfadkanäle (L1 bis Lx) auf dem mindestens einen angeschlossenen Verbindungspfadabschnitt (FA1 bis FA3) zuständiger optischer Verwaltungsnetzknoten (VWK1 bis VWK2) ermittelt wird, der an den betrachteten Verbindungspfadabschnitt (FA1 bis FA3) angeschlossenen ist,
**daß** in Übertragungsrichtung (UR1) entlang des bidirektionalen Verbindungspfades (BVP) jeweils von einem optischen Netzknoten (ONK1) an den folgenden optischen Netzknoten (ONK2) eine eine Pfad-Identifikationsnummer (ID1) sowie die Zielknotenadresse (ZA) des einzurichtenden bidirektionalen Verbindungspfades (BVP) enthaltende "Label-Request-Nachricht" (LRM) gesendet wird,
**daß** im optischen Verwaltungsnetzknoten (VWK1, VWK2) die für den betrachteten Verbindungspfadabschnitt (FA1 bis FA3) verfügbaren bidirektionalen Verbindungspfadkanäle (L1 bis Lx) über die durch die Anpassungsschicht verfügbaren Labels (L1 bis Lx) ermittelt werden sowie ein verfügbares Label (L4) pro angeschlossenen Verbindungspfadabschnitt (FA1) ausgewählt wird, wobei das für den Verbindungspfadabschnitt (FA1) zwischen den Verwaltungsnetzknoten (VWK1) und dem folgenden Nicht-Verwaltungsnetzknoten (ONK3) ausgewählte Label (L5) dem Nicht-Verwaltungsnetzknoten (ONK3) anhand der "Label-Request-Nachricht" (LRM) mitgeteilt wird,
**daß** in entgegengesetzter Übertragungsrichtung (UR2) entlang des bidirektionalen Verbindungspfades (BVP) jeweils von einem optischen Netzknoten (ONK4) an den folgenden optischen Netzknoten (ONK3) eine eine Pfad-Identifikationsnummer (ID1) enthaltende "Label-Mapping-Nachricht" (LMM) gesendet wird, wobei das für den Verbindungspfadabschnitt (FA1, FA3) zwischen einem Verwaltungsnetzknoten (VWK1, VWK3) und dem folgenden Nicht-Verwaltungsnetzknoten (ONK1, ONK3) ausgewählte Label (L4, L6) durch den Verwaltungsnetzknoten (VWK1, VWK2) dem folgenden Nicht-Verwaltungsnetzknoten (ONK3) anhand der "Label-Mapping-Nachricht" (LMM) mitgeteilt wird und
**daß** in den optischen Nicht-Verwaltungsnetzknoten (ONK1, ONK3) der durch das übermittelte Label (L4,L6) festgelegte bidirektionale Verbindungpfadkanal (L4,L6) durchgeschaltet wird.

8. Verfahren nach Anspruch 7,
**dadurch gekennzeichnet,**
**daß** die Wellenlängen (λ1 bis λm, λ1 bis λn, λ1 bis λo, λ1 bis λp) der für die Übertragungsrichtung (UR1) und für die entgegengesetzte Übertragungsrichtung (UR2) vorgesehenen Übertragungskanäle (λ1 bis λm, λ1 bis λn, λ1 bis λo, λ1 bis λp) eines bidirektionalen Verbindungspfadkanals (L1 bis Lx) anhand einer Zuordnungstabelle (ZTa, ZTb) festgelegt werden.

9. Verfahren nach Anspruch 7 oder 8,
**dadurch gekennzeichnet,**
**daß** die Festlegung eines optischen Verwaltungsnetzknotens (VWK1, VWK2) durch die Bewertung der Knotenadressen der optischen Netzknoten (ONK1 bis ONK4) durchgeführt wird.
